# EUROPEAN PATENT APPLICATION

(11) **EP 3 798 931 A1**
(43) Date of publication of application: **31.03.2021**
(21) Application number: 20197344.3
(22) Date of filing: 22.09.2020
(51) Int. Cl.: G06N 3/08, G06N 20/00

(54) **MACHINE LEARNING TRAINING RESOURCE MANAGEMENT**

(30) Priority: 30.09.2019 US 201916587689
(71) Applicant: Facebook Inc., Menlo Park, California 94025 (US)
(72) Inventor: Jia, Hongzhong, Menlo Park, California 94025 (US); Parikh, Jay, Menlo Park, California 94025 (US)
(74) Representative: Murgitroyd & Company

(57) **Abstract**

It is determined that a selected server among a pool of servers is eligible to be utilized for machine learning training. At least the selected server is utilized to train at least a portion of a machine learning model. It is determined that the selected server among the pool of servers is no longer eligible to be utilized for machine learning training. A training state of the machine learning model is saved. The selected server is returned for other use in the pool of servers.

## Description

### BACKGROUND OF THE INVENTION

Machine learning involves a lot of experimentation with various different training before a successful machine learning model is discovered. Before a successful machine learning model can be deployed in a live production system for use in inference tasks for end users, the machine learning model must be trained in a computationally intensive process that involves many repetitive iterations. Often this training is performed in an offline process using dedicated machines. Limitations of these dedicated resources often restrict the frequency existing machine learning models can be retrained as well as the amount of experimentation to produce new improved models. Additionally, limitations of these dedicated resources often restrict the variety of existing machine learning models that can be trained as well as the amount of experimentation to produce new improved models.

### SUMMARY OF THE INVENTION

Accordingly, the present invention discloses methods, systems and computer readable storage media according to the appended claims. In some embodiments of the method according to the present invention, it is determined that a selected server among a pool of servers (e.g., pool of production servers available to handle processing associated with live end-user requests of a social networking service) is eligible to be utilized for machine learning training. For example, based on a current workload that is below a threshold and/or a current time corresponding to generally low workload, it is determined that a portion of servers in the pool of production servers can be utilized for machine learning training instead of handling processing for live end-user traffic. At least the selected server is utilized to train at least a portion of a machine learning model. For example, the select server is one of multiple ones among the pool of servers temporarily repurposed to train the machine learning model. Then, it is determined that the selected server is no longer eligible to be utilized for machine learning training. For example, when the amount/rate of pending end-user requests exceeds a threshold and/or a current time corresponds to generally higher production workload, the selected server may need to be returned back for use to handle production workload processing. The machine learning training state of the machine learning model is saved and the selected server is returned for other use (e.g., production workload) in the pool of servers. For example, by saving the states, the machine learning training can be resumed from the save state rather than starting over again when at least a portion of the production servers becomes available again for machine learning training use.

In embodiments of the method according to the present invention, the pool of servers may be a pool of production servers, and/or at least a portion of the pool of servers may be eligible to be temporarily utilized for machine learning training when one or more conditions are met and the training of the machine learning model is determined to be commenced based on a determination that one or more conditions are met.

In embodiments of the method according to the present invention, determining that the selected server among the pool of servers is eligible to be utilized for machine learning training may include determining that a current time is within a window of time that at least a portion of the pool of servers is eligible to be utilized for machine learning training. Alternatively, determining that the selected server among the pool of servers is eligible to be utilized for machine learning training may include selecting a plurality of selected servers among eligible servers included in the pool of servers based on parameters associated with training of the machine learning model.

In embodiments of the method according to the present invention, using at least the selected server to train at least the portion of the machine learning model may further include temporarily removing the selected server from being eligible to perform processing for production workload associated with live end-user requests of a social networking service.

In embodiments of the method according to the present invention, determining that the selected server among the pool of servers is no longer eligible to be utilized for machine learning training may includes determining that the selected server is to be returned back to the pool of servers for production workloads. Alternatively, determining that the selected server among the pool of servers is no longer eligible to be utilized for machine learning training may include determining that a current time is outside a window of time that the selected server is eligible to be utilized for machine learning training.

In embodiments of the method according to the present invention, saving the training state of the machine learning model may include determining that training of the machine learning model has not been completed prior to the determination that the selected server is no longer eligible to be utilized for machine learning training. Alternatively, saving the training state of the machine learning model may include storing the training state of the machine learning model in a repository of machine learning models.

In embodiments of the method according to the present invention, saving the training state of the machine learning model may include storing one or more of the following associated with the machine learning model: an identification or parameters of a model architecture, model features, a partially trained model, one or more weight matrices, current/intermediate parameters/weights, an identification of artificial neural network connections and layers, an identification of amount of training data processed, an identification of processing/work already completed, an identification of processing/work not yet completed, or states/snapshot of the selected server.

In embodiments of the method according to the present invention, returning the selected server for other use in the pool of servers may include returning the selected server for use in a production workload of a social networking service.

In embodiments of the method according to the present invention, the method may further comprise determining that another selected server among the pool of servers is eligible to be utilized for machine learning training; and using at least a portion of the saved training state at the another selected server to resume training of the machine learning model.

In embodiments of the method according to the present invention, the machine learning model and associated data may be stored in a repository that stores other machine learning models and their associated data.

In embodiments of the method according to the present invention, the associated data for each machine leaning model stored in the repository ,may include one or more of the following: an identification/parameters of a model architecture, model features, a trained model, one or more weight matrices, current/intermediate parameters/weights, an identification of artificial neural network connections and layers, an identification of training data used to train the model, historical machine learning trainings and associated results, or one or more associated performance metrics. In addition, the method may further comprise in response to a user request or automatic determination, searching the repository to determine for a new potential machine learning training to be performed, whether a same or similar machine learning training has been previously performed. Alternatively, the method may further comprise utilizing the repository to automatically identify and perform a new machine learning training without human intervention in response to a determination that sufficient resources are free to be utilized to perform the new machine learning training. Alternatively, the method may further comprise utilizing the repository to generate a new machine learning model based on a combination of portions of a plurality of machine learning models stored in the repository.

In an aspect, the invention further discloses a system comprising:
a processor configured to perform the methods described above or to:
determine that a selected server among a pool of servers is eligible to be utilized for machine learning training;
use at least the selected server to train at least a portion of a machine learning model;
determine that the selected server among the pool of servers is no longer eligible to be utilized for machine learning training;
save a training state of the machine learning model; and
return the selected server for other use in the pool of servers; and a memory coupled with the processor, wherein the memory is configured to provide the processor with instructions.

In an aspect, the invention further discloses a computer program product, the computer program product being embodied in a non-transitory computer readable storage medium and comprising computer instructions for performing the methods described above or for:
determining that a selected server among a pool of servers is eligible to be utilized for machine learning training;
using at least the selected server to train at least a portion of a machine learning model;
determining that the selected server among the pool of servers is no longer eligible to be utilized for machine learning training;
saving a training state of the machine learning model; and
returning the selected server for other use in the pool of servers.

### BRIEF DESCRIPTION OF THE DRAWINGS

Various embodiments of the invention are disclosed in the following detailed description and the accompanying drawings.
Figure 1 is a block diagram illustrating an embodiment of a system environment for managing machine learning.
Figure 2 is a flowchart illustrating an embodiment of a process for temporarily utilizing servers to perform machine learning.
Figure 3 is a flowchart illustrating an embodiment of a process for resuming machine learning training.
Figure 4 is a flowchart illustrating an embodiment of a process for generating new machine learning models using a repository of models.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Efficiently utilizing existing computational resources for machine learning is disclosed. For example, an end-user traffic pattern is often cyclic with peak traffic occurring at a certain time of the day while some other parts of the day experience minimal traffic. To ensure good user experience, production systems are sized to handle the peak traffic. However, during times of low traffic, some of these production systems that handle processing for end-user requests are underutilized and can be temporarily repurposed to handle machine leaning training. When these systems are likely needed again to handle end-user request associated processing, it is desirable to return them back to the pool of available production systems. However, because a machine learning training task can take days, simply discarding current progress and restarting the uncompleted machine learning task next time the system is available is not productive.

In some embodiments, it is determined that a selected server among a pool of servers (e.g., pool of production servers available to handle processing associated with live end-user requests of a social networking service) is eligible to be utilized for machine learning training. For example, based on a current workload that is below a threshold and/or a current time corresponding to generally low workload, it is determined that a portion of servers in the pool of production servers can be utilized for machine learning training instead of handling processing for live end-user traffic. At least the selected server is utilized to train at least a portion of a machine learning model. For example, the select server is one of multiple ones among the pool of servers temporarily repurposed to train the machine learning model. Then, it is determined that the selected server is no longer eligible to be utilized for machine learning training. For example, when the amount/rate of pending end-user requests exceeds a threshold and/or a current time corresponds to generally higher production workload, the selected server may need to be returned back for use to handle production workload processing. The machine learning training state of the machine learning model is saved and the selected server is returned for other use (e.g., production workload) in the pool of servers. For example, by saving the states, the machine learning training can be resumed from the save state rather than starting over again when at least a portion of the production servers becomes available again for machine learning training use.

When multiple engineers are working on solving the same or similar problem using machine learning, different engineers may end up training the same or similar machine learning model independently because one engineer is not aware of previous efforts by another engineer. In some embodiments, a repository of models and associated previous machine learning training for various different models is maintained. For example, parameters, metadata, training information, results, the resulting model, and/or other associated information is stored for each performed machine learning model building/training. This repository is searchable and allows a user to identify whether a same or similar machine learning training has been previously performed. For example, if it is discovered that a same or similar training has been previously performed, the machine learning training does not need to be performed again, thus saving compute resources from being wasted on duplicative work. The repository can also be used to automatically provide a notification on whether a same or similar machine learning training has been previously performed. For example, when a request for machine learning training is received, the repository is automatically searched to proactively identify whether a same or similar machine learning training has been previously performed and notify a user of the search results. In some embodiments, the provided result includes a graph, chart or other visual that shows possible training space and identification(s) of areas have been already explored with previously performed machine learning training.

A repository of machine learning models can be leveraged to identify and/or generate new and improved machine learning models. For example, previously trainings, models, and results can be stored, indexed, and analyzed to combine portions of models to generate new models as well as perform new training with new model architectures/parameters previously not recorded as attempted in the repository. This could be automatically performed without human intervention and/or at least in part manually managed by an engineer using the repository. For example, for previous trainings that resulted in poor results, other similar trainings are not suggested, whereas for previous trainings with good results, similar trainings are suggested, with the hope that better results can be achieved. The suggestions of new models and trainings can be performed in such a way that better results can be more easily found using knowledge gained by analyzing historical trainings and their results. The automatic generation of a new machine learning model can be performed when sufficient free/available resources are identified (e.g., at off-peak times when excess computing resources are available). For example, new trainings are performed automatically when additional computing resources (e.g., servers) are available during off-peak hours.

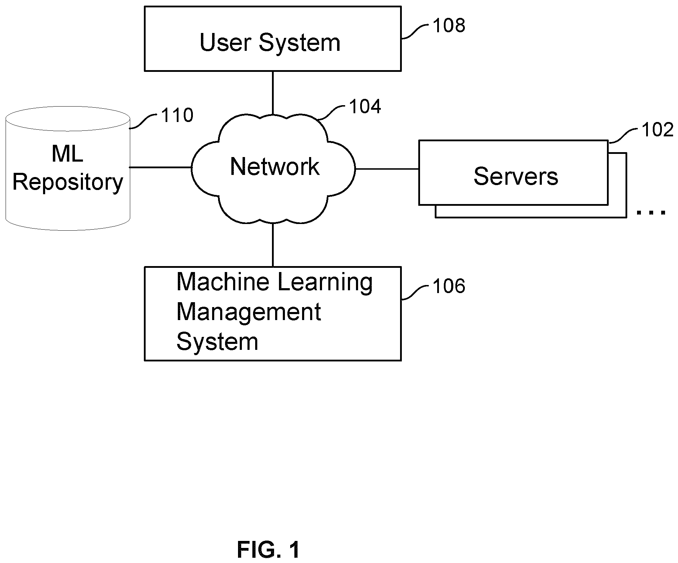

Figure 1 is a block diagram illustrating an embodiment of a system environment for managing machine learning.

Servers 102 may include one or more compute, storage, web, application, and/or other processing servers. Servers 102 may be located in one or more different data centers. In some embodiments, servers 102 include production servers (e.g., live servers). Production servers may include servers that host and/or perform processing associated with live end-user requests (e.g., for a social networking service). For example, a production server is a server that provides live processing to provide requested data/content to a webpage or an application of an end-user. In contrast, a development server is a type of server utilized in the development of program, code, or product that may eventually be hosted/executed by a production server for an end-user. Because the performance of production servers directly impacts an end-user experience, a pool of production servers are allocated enough computing resources to handle peak traffic. For example, an end-user traffic pattern is often cyclic with peak traffic occurring at certain times of the day while some other parts of the day experience minimal traffic. This means that during times of low traffic, some of these production servers are underutilized. In some embodiments, some of servers 102 are temporarily repurposed to handle machine leaning training. If these servers are needed again to handle end-user request associated processing, it is desirable to return them back to the pool of available production servers. However, because a machine learning training task can take days, simply discarding current progress and restarting the uncompleted machine learning task next time the system is available is not productive.

Machine learning management system 106 includes one or more servers/computers configured to orchestrate and manage the utilization of one or more servers of server 102 for machine learning. For example, machine learning management system 106 initiates machine learning training on selected ones of servers 102 at an opportune condition. Machine learning management system 106 may also suspend machine learning training when these selected servers are needed for other tasks.

In some embodiments, when the selected server needs to be returned back for other uses (e.g., returned back as a production server to handle processing associated with live user requests), the machine learning training state of the machine learning model is saved. This machine learning training state may be stored in machine learning repository 110, one or more storages of server 102, one or more storages of system 106, and/or another storage. By saving the state, the machine learning training can be resumed from the save state rather than starting over again when at least a portion of the servers 102 becomes available again for machine learning training use.

In some embodiments, machine learning repository 110 stores a repository of machine learning models and associated data. For example, training progress, training data, training states, parameters, metadata, results, the resulting model, and/or other associated information is stored for each performed machine learning model building/training. This repository is searchable and allows a user to identify whether a same or similar machine learning training has been previously performed. For example, if it is discovered that a same or similar training has been previously performed, the machine learning training does not need to be performed again, thus saving compute resources from being wasted on duplicative work. Repository 110 may be leveraged to identify and/or generate new and improved machine learning models. For example, models and results can be stored, indexed, and analyzed to combine portions of models to generate new models as well as perform new training with new model architectures/parameters previously not recorded as attempted in the repository. This could be automatically performed without human intervention and/or at least in part manually managed by an engineer using the repository.

In some embodiments, user system 108 is utilized by a user to interact with machine learning management system 106. For example, user system 108 is utilized by an engineer to request a machine learning model training, and the request is provided to system 106 that will automatically manage the training performed using at least a portion of server 102 at opportune times. In some embodiments, user system 108 is utilized by a user to interact with repository 110. For example, user system 108 is utilized by a machine learning researcher or engineer to request data of repository 110 and/or perform a search or an analysis of data stored in repository 110. Examples of user system 108 include a personal computer, a laptop computer, a tablet computer, a mobile device, a display device, a user input device, and any other computing device.

Although limited number of instances of components have been shown to simplify the diagram, additional instances of any of the components shown in Figure 1 may exist. Components not shown in Figure 1 may also exist. The components shown communicate with each other via network 104. Examples of network 104 include one or more of the following: a direct or indirect physical communication connection, mobile communication network, Internet, intranet, Local Area Network, Wide Area Network, Storage Area Network, and any other form of connecting two or more systems, components, or storage devices together. Any number of components may be included in user system 108.

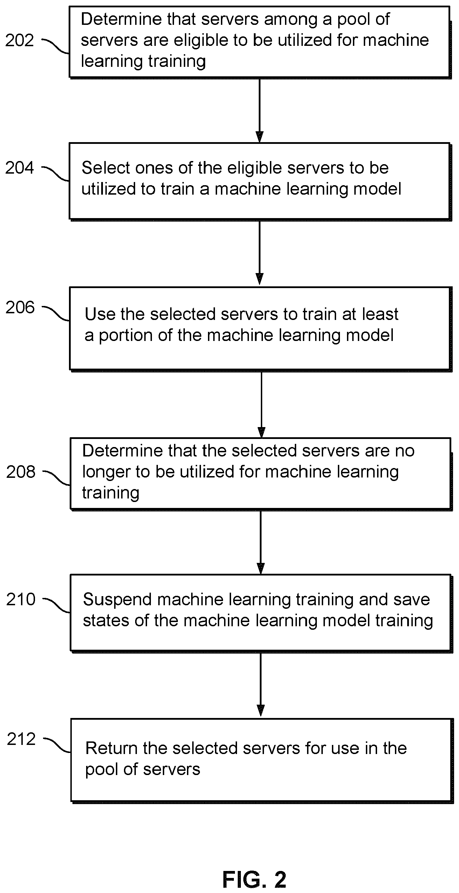

Figure 2 is a flowchart illustrating an embodiment of a process for temporarily utilizing servers to perform machine learning. At least a portion of the process of Figure 2 may be performed by management system 106 and/or one or more servers of servers 102.

At 202, it is determined that servers among a pool of servers are eligible to be utilized for machine learning training. For example, there exists a pool of production servers and when certain conditions are met (e.g., during a time of low utilization), at least a portion of the pool of production servers is allowed to be utilized for training a machine learning model. The determination that servers are eligible to be utilized for machine learning may be based on a current or historical metric associated with one or more of the following: a time of day, a day of week, a system utilization load, a utilization rate, a memory utilization, a disk utilization, a network bandwidth utilization, network status, system status, an amount of pending workload, an amount of scheduled workload, a maintenance schedule, a detected error, an amount of computing resource available, amounts of specific types of systems/servers available, etc. For example, at specific times of a day (e.g., corresponding to time periods when production workload is historically observed to be low), a portion of a pool of production servers is allowed to be utilized for machine learning training. In a specific example, machine learning training use is enabled in selected servers when a current time is within one or more specified windows of time and a current utilization load factor of the pool of servers is below a threshold value. There may be other triggers in this example that disable machine learning training use eligibility such as a detection of an error in the pool of servers that exceeds a threshold severity, a detection of a scheduled workload above a threshold amount within a specified amount of time, or a detection of a maintenance event.

In some embodiments, only a portion of the pool of production servers is eligible to be utilized for machine learning training at the same time. For example, a minimum amount of computing resources/servers are to be reserved for its main function (e.g., for production workload processing) and not utilized for offline machine learning training. These selected servers may be removed from use in production workloads while used for machine learning training and returned back to production use when needed. In some embodiments, the machine learning training is to be executed in sandboxed portions of production servers. In some embodiments, the portion of the pool of production servers eligible to be utilized for machine learning training may be selected based on amounts of specific types of servers available. For example, minimum numbers of certain types of servers within the pool are to be utilized for production use and not utilized for machine learning training.

At 204, one or more servers among the eligible servers are selected to be utilized to train a machine learning model. Training the machine learning model may require multiple servers to be utilized together in a distributed manner to perform a large amount of training workload that would be too large for a single server to perform. In some embodiments, a machine learning management system (e.g., system 106 of Figure 1) receives a request for machine learning training to be performed, and the machine learning management system selects among the eligible servers the one or more servers to be utilized to train the requested machine learning model to be trained. In some embodiments, the requested machine learning is not performed until sufficient amount of free resources are available for the training and/or one or more other conditions are met (e.g., to be performed at an off-peak time when it is determined in 202 that servers among the pool of servers are eligible to be utilized for machine learning training). For example, given that machine learning training can be greedy (e.g., almost unlimited trainings can be performed since the training space can be unbounded), machine learning training is performed when sufficient free/available resources are identified (e.g., during off-peak hours when production system resources become available for training), allowing resource waste to be minimized. The request may indicate an amount of processing resources desired/optimal to train the model, a desired training completion time, a priority identification, identification of one or more types of servers/systems desired to train the model, etc. For example, a machine learning engineer specifies one or more desired or required parameters for the training of the model and these parameters are taken into consideration when determining the amount and which of the eligible servers to be assigned to perform the training of the model. In various embodiments, the one or more servers among the eligible servers are selected to be utilized to train the machine learning model based on one or more of the following: the amount of processing required to train the model, a priority ranking of the model, a desired training completion time, amount of available resources available to train the model, identification of one or more types of servers/systems desired, and/or amount of training to be performed for one or more other machine learning models.

At 206, the one or more selected servers are utilized to train at least a portion of the machine learning model. In some embodiments, different portions of the machine learning training are distributed to different ones of the selected servers and the servers are instructed to perform processing to perform the machine learning training. In some embodiments, the selected servers are taken offline from production work to perform the machine learning training. For example, the selected servers are temporarily removed from the pool of servers available to perform production work to provide a social networking service to end users while the selected servers are to perform the machine learning training. In some embodiments, the machine learning training is performed in a sandbox environment within at least one of the selected servers. This may allow the machine learning training workload to be performed in an isolated environment while other processing work (e.g., production system work) is performed on the server.

At 208, it is determined that the selected servers are no longer to be utilized for machine learning training. For example, the selected servers are to be returned for their main intended use (e.g., use in performing production or other type of work) when needed.

The determination that servers are no longer to be utilized for machine learning training may be based on a current or historical metric associated with one or more of the following: a time of day, a day of week, a system utilization load, a utilization rate, a memory utilization, a disk utilization, a network bandwidth utilization, network status, system status, an amount of pending workload, an amount of scheduled workload, a maintenance schedule, a detected error, an amount of computing resource available, amounts of specific types of systems/servers available, etc. For example, at specific times of a day (e.g., corresponding to time periods when production workload is historically observed to be not low), servers that were allowed to be temporarily utilized for machine learning training are to be returned back. In a specific example, the selected servers are no longer to be utilized for machine learning training when a current time is outside one or more specified windows of time or a current utilization load factor of the pool of production system servers is above a threshold value. There may be other triggers that cause machine learning training to be suspended, such as a detection of an error in the selected servers, a detection of a scheduled workload to be performed, or a detection of a maintenance event.

In the event the machine learning training is completed, an indication of completion is provided and the selected servers can be utilized to train another model. The trained model and associated metadata, settings, intermediate data, parameters, and/or other associated information may be stored in a storage/repository (e.g., repository 110 of Figure 1). This repository may be later utilized to track and manage complete machine learning as well as inform future machine learning to be performed.

At 210, the machine learning training is suspended and one or more states of the machine learning model training are saved. For example, in the event machine learning training has not been completed but it is determined that the selected servers are to be no longer utilized for machine learning, states of the machine learning are saved so that the machine learning training can be resumed from the saved state at a later point in time rather than starting from the beginning again.

Saving the states of the machine learning model includes saving one or more of the following: identification/parameters of a model architecture of the model being trained, model features, partially trained model, one or more weight matrices, current/intermediate parameters/weights of the model (e.g., neural network weights) being trained, identification of artificial neural network connections and layers (e.g., graph), identification of amount of training data processed (e.g., identification of training data that has been already used to at least partially train the model, identification of training data to be used to train the model, etc.), identification of processing/work already completed, identification of processing/work not yet completed, states/snapshot of specific machines/servers utilized in training the model, etc. In some embodiments, the saved states are stored in repository 110 of Figure 1.

In an embodiment, the saved states are agnostic to the specific configuration/type of machines/servers that have been training the model, allowing the saved states to be utilized by another machine/server of a different configuration/type to resume the training. In a different embodiment, the saved states include data specific to the specific configuration/type of machines/servers that have been training the model, allowing the saved states to be directly utilized by another machine/server of a same configuration/type to resume the training with minimal, if any, translation of the saved states to the new machine/server being used. For example, a snapshot of each of one or more servers is included in the saved states and the saved snapshot is loaded in the same type of server when training is resumed at a later time.

In some embodiments, if it is determined that the model training has been completed, the one or more states of the machine learning model training are not saved since the training does not have to be resumed. In some embodiments, if it is determined that the model training has been completed, the one or more states of the machine learning model training are still saved in a repository that tracks machine learning (e.g., saved in repository 110 of Figure 1).

At 212, the selected server are returned for use in the pool of production servers. For example, the eligible servers, including the selected servers, are returned for production use of a social networking service in the pool of production servers. This may include returning servers that were temporarily removed from production use and put offline back into production use and online (e.g., put back into the pool of servers eligible to perform production processing tasks). In another example, sandbox environments of the servers where machine learning training was performed are suspended, paused, destroyed, deactivated, closed, and/or disabled.

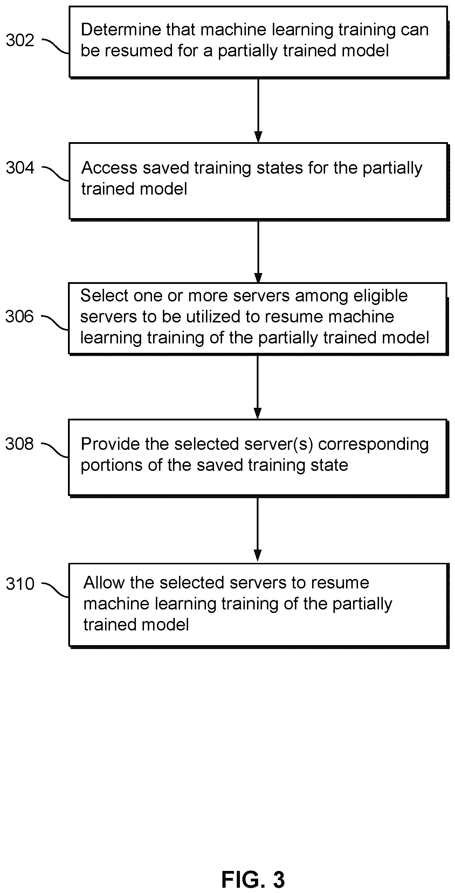

Figure 3 is a flowchart illustrating an embodiment of a process for resuming machine learning training. At least a portion of the process of Figure 3 may be performed by management system 106 and/or one or more servers of servers 102.

At 302, it is determined that machine learning training can be resumed for a partially trained model. For example, machine learning training at least in part performed and suspended during the process of Figure 2 is resumed using at least a portion of the process of Figure 3. In some embodiments, the machine learning training suspended in 210 of Figure 2 is to be resumed. For example, any machine learning training suspended due to the determination that the selected servers are no longer to be utilized for machine learning training is automatically resumed when servers among a pool of servers are eligible again to be utilized for machine learning training. In some embodiments, machine learning management system 106 handles and schedules new requests for machine learning training as well as resuming suspended machine learning training.

In some embodiments, determining that machine learning training can be resumed includes determining that servers among a pool of servers are eligible to be utilized for machine learning training. For example, there exists a pool of production servers and when certain conditions are met (e.g., during a time of low utilization), at least a portion of the pool of production servers are allowed to be utilized to train a machine learning model or resume training of a machine learning model. The determination that servers are eligible to be utilized for machine learning may be based on a current or historical metric associated with one or more of the following: a time of day, a day of week, a system utilization load, a utilization rate, a memory utilization, a disk utilization, a network bandwidth utilization, network status, system status, an amount of pending workload, an amount of scheduled workload, a maintenance schedule, a detected error, an amount of computing resource available, amounts of specific types of systems/servers available, etc. For example, at specific times of a day (e.g., corresponding to time periods when production workload is historically observed to be low), a portion of a pool of production servers is allowed to be utilized for machine learning training. In a specific example, machine learning training use is enabled in selected servers when a current time is within one or more specified windows of time and a current utilization load factor of the pool of servers is below a threshold value. There may be other triggers in this example that disable machine learning training use eligibility such as a detection of an error in the pool of servers that exceeds a threshold severity, a detection of a scheduled workload above a threshold amount within a specified amount of time, or a detection of a maintenance event.

In some embodiments, only a portion of the pool of production servers is eligible to be utilized for machine learning training. For example, a minimum amount of computing resources/servers is to be reserved for its main function (e.g., for production workload processing) and not utilized for offline machine learning training. These selected servers may be removed from use in production workloads while used for machine learning training and returned back to production use when needed. In some embodiments, the machine learning training is to be executed in sandboxed portions of production servers. In some embodiments, the portion of the pool of production servers eligible to be utilized for machine learning training may be selected based on amounts of specific types of servers available. For example, minimum numbers of certain types of servers within the pool are to be utilized for production use and not utilized for machine learning training.

At 304, saved training states for the partially trained model are accessed. For example, the training states saved in 210 of Figure 2 are retrieved from a storage/repository (e.g., repository 110 of Figure 1). The saved training states for the model are identified within the storage and/or repository using an identifier of the model stored in a list of one or more models to be trained (e.g., list of model training to be scheduled/invoked including training to be resumed).

At 306, one or more servers among eligible servers are selected to be utilized to resume machine learning training of the partially trained model. The selection of the servers is based at least in part on the saved training states for the partially trained model. For example, the saved states may indicate an amount of processing resources desired/optimal to train the model, amount of processing resources previously provided to train the model, a desired training completion time, amount processing remaining to train the model, a priority identification, identification of one or more types of servers/systems desired to train the model, identification of one or more types of servers/systems previously utilized to train the model, etc. In an example, an attempt is made to assign the machine learning training to the same type(s) of servers with the same amount of processing resources as utilized in a previous training instance. If the same type of servers/systems with the same amount of available resources is not available, an attempt may be made to select servers among the eligible servers such that a total amount of certain resources (e.g., processing capacity, memory, storage, etc.) of these selected servers is to match those of servers utilized in a previous training instance. This may result in more/less number of servers selected to train the partially trained model as compared to the previous instance.

At 308, the selected server(s) are provided corresponding portions of the saved training state to resume machine learning training of the partially trained model. In some embodiments, providing the corresponding portions of the saved training state includes providing to a server a portion of the saved states corresponding to the work to be performed by the server. In some embodiments, a snapshot of a server when the machine learning training was suspended in a previous iteration is provided to a new server and the new server loads the snapshot and resumes training from the states of the snapshot. At least a portion of the saved training state may be translated/transformed/processed prior to being provided one or more selected servers. For example, at least a portion of the saved training state is transformed to one or more versions compatible with one or more type(s) of selected servers/systems (e.g., transformed to a version compatible with an operating system, a processor, or other specifications of a selected server). In some embodiments, a processing initially assigned to be performed by a plurality of servers is consolidated to be performed by a smaller number of one or more servers (e.g., selected server(s) have a larger processing capacity than a type of servers in previous training iterations that are no longer available to be utilized in the current iteration). In some embodiments, a training workload initially assigned to be performed by one server according to the saved states is divided to be performed by more than one of the selected servers (e.g., selected servers have smaller processing capacity than a type of server in previous training iterations that is no longer available to be utilized in the current iteration).

At 310, the selected servers are allowed to resume machine learning training of the partially trained model. For example, the selected servers are instructed to perform processing to perform the machine learning training. In some embodiments, the selected servers are taken offline from production work to perform the machine learning training. For example, the selected servers are temporarily removed from the pool of servers available to perform production work to provide a social networking service to end users while the selected servers are to perform the machine learning training. In some embodiments, the machine learning training is performed in a sandbox environment within at least one of the selected servers. This may allow the machine learning training workload to be performed in an isolated environment while other processing work (e.g., production system work) is performed on the server.

In the event the machine learning training is completed, an indication of completion is provided and the selected servers can be utilized to train another model. The trained model and associated metadata, settings, intermediate data, parameters, and/or other associated information may be stored in a storage/repository (e.g., repository 110 of Figure 1). This repository may be later utilized to track and manage complete machine learning as well as inform future machine learning to be performed.

In some embodiments, in the event the machine learning training is unable to be completed prior to selected servers being returned back for other types of work (e.g., returned back for production workloads), the process proceeds to 208 of Figure 2 where it is determined that the selected servers are no longer to be utilized for machine learning training, at 210 where machine learning training is suspended and the current states of the machine learning model training are saved, and at 212 where the selected servers are returned for use in the pool of servers.

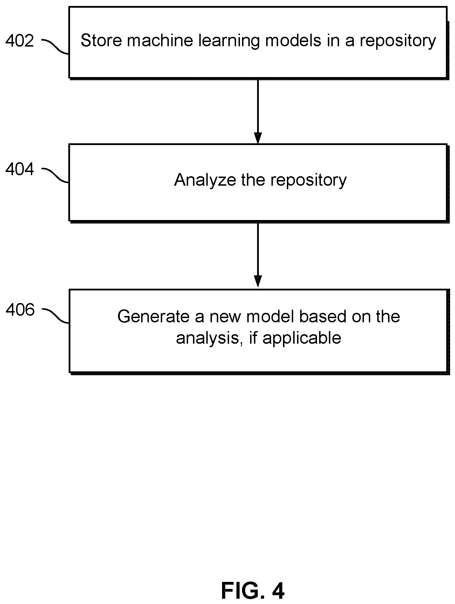

Figure 4 is a flowchart illustrating an embodiment of a process for generating new machine learning models using a repository of models. At least a portion of the process of Figure 4 may be performed by management system 106 and/or one or more servers of servers 102.

At 402, machine learning models are stored in a repository. Each time a new machine learning model is trained, the trained model and associated training parameters, configurations, intermediate models, and/or associated performance results may be stored in the repository. This repository is searchable and allows a user to identify whether a same or similar machine learning training has been previously performed. Examples of data stored for each different machine learning model stored in the repository includes one or more of the following: identification/parameters of a model architecture of the model, model features, trained models, one or more weight matrices, current/intermediate parameters/weights of the model (e.g., neural network weights), identification of artificial neural network connections and layers (e.g., graph of nodes and vertices of a neural network), identification of training data used to train the model, one or more performance metrics associated with the model, or other parameters, metadata, results, associated information, etc.

At 404, the repository is analyzed, and at 406, a new model is generated based on the analysis, if applicable. In some embodiments, the repository is analyzed in response to a search request and/or a request to perform a machine learning training. The searchable repository allows a determination of whether a same or similar machine learning training has been previously performed. For example, if it is discovered that a same or similar training has been previously performed, the machine learning training does not need to be performed again, thus saving compute resources from being wasted on duplicative work. For example, previously trained models that have previously utilized same or similar training data and same or similar training parameters/configuration/architecture as compared to a training to be performed are identified and presented to a user. The user may then decide to not continue with the training to be performed because it was already performed and the resulting model of the desired training can be directly obtained from the repository, parameters of the training to be performed can be modified in light of results of other similar machine learning models, or the training can be continued because similar training has not been previously performed.

In some embodiments, the repository of machine learning models can be leveraged to identify and/or generate new and improved machine learning models. For example, the repository can be indexed and analyzed to combine portions of models to generate new models as well as preform new training with new model architectures/parameters previously not recorded as attempted in the repository. This could be automatically performed without human intervention and/or at least in part manually managed by a user using the repository. In some embodiments, analyzing the repository includes identifying similarities between models in the repository. For example, if a first group of models are known to generate accurate predictions for a first type of inputs, similarity between the models in the first group can be determined (e.g., identify common graph portions of artificial neural network models in the first group) and utilized in generating new models that also have the found similarity. Additionally, if a second group of models is known to generate accurate predictions for a second type of inputs, similarity between the models in the second group can be determined (e.g., identify common graph portions of artificial neural network models in the second group) and utilized in generating new models that have both the found similarity in the first group and the found similarity in the second group to produce a model that generates accurate predictions for both the first and second types of inputs.

In some embodiments, new models are generated automatically based on analysis of the repository in an attempt to automatically generate an improved machine learning model that provides a better prediction than existing models in the repository. Different training parameters and configurations can be automatically selected based on a history and performance of previous training parameters and configurations of previously generated models to generate and train various different new machine learning models that are automatically generated. Given a specified goal or desired result and a test to test a performance of a new model, the automatically generated and trained models can be automatically tested to determine which models improve performance and these models can be further automatically improved to continually search and generate improved models.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method, comprising:
determining that a selected server among a pool of servers is eligible to be utilized for machine learning training;
using at least the selected server to train at least a portion of a machine learning model;
determining that the selected server among the pool of servers is no longer eligible to be utilized for machine learning training;
saving a training state of the machine learning model; and
returning the selected server for other use in the pool of servers.

2. The method of claim 1, wherein the pool of servers is a pool of production servers and/or wherein at least a portion of the pool of servers is eligible to be temporarily utilized for machine learning training when one or more conditions are met and the training of the machine learning model is determined to be commenced based on a determination that one or more conditions are met.

3. The method of claim 1, wherein determining that the selected server among the pool of servers is eligible to be utilized for machine learning training includes determining that a current time is within a window of time that at least a portion of the pool of servers is eligible to be utilized for machine learning training, or selecting a plurality of selected servers among eligible servers included in the pool of servers based on parameters associated with training of the machine learning model.

4. The method of claim 1, wherein using at least the selected server to train at least the portion of the machine learning model includes temporarily removing the selected server from being eligible to perform processing for production workload associated with live end-user requests of a social networking service.

5. The method of claim 1, wherein determining that the selected server among the pool of servers is no longer eligible to be utilized for machine learning training includes determining that the selected server is to be returned back to the pool of servers for production workloads, or that a current time is outside a window of time that the selected server is eligible to be utilized for machine learning training.

6. The method of claim 1, wherein saving the training state of the machine learning model includes determining that training of the machine learning model has not been completed prior to the determination that the selected server is no longer eligible to be utilized for machine learning training, or storing the training state of the machine learning model in a repository of machine learning models, or storing one or more of the following associated with the machine learning model: an identification or parameters of a model architecture, model features, a partially trained model, one or more weight matrices, current/intermediate parameters/weights, an identification of artificial neural network connections and layers, an identification of amount of training data processed, an identification of processing/work already completed, an identification of processing/work not yet completed, or states/snapshot of the selected server.

7. The method of claim 1, wherein returning the selected server for other use in the pool of servers includes returning the selected server for use in a production workload of a social networking service.

8. The method of claim 1, further comprising determining that another selected server among the pool of servers is eligible to be utilized for machine learning training; and using at least a portion of the saved training state at the another selected server to resume training of the machine learning model.

9. The method of claim 1, wherein the machine learning model and associated data are stored in a repository that stores other machine learning models and their associated data.

10. The method of claim 14, wherein the associated data for each machine leaning model stored in the repository includes one or more of the following: an identification/parameters of a model architecture, model features, a trained model, one or more weight matrices, current/intermediate parameters/weights, an identification of artificial neural network connections and layers, an identification of training data used to train the model, historical machine learning trainings and associated results, or one or more associated performance metrics.

11. The method of claim 14, further comprising in response to a user request or automatic determination, searching the repository to determine for a new potential machine learning training to be performed, whether a same or similar machine learning training has been previously performed.

12. The method of claim 14, further comprising utilizing the repository to automatically identify and perform a new machine learning training without human intervention in response to a determination that sufficient resources are free to be utilized to perform the new machine learning training.

13. The method of claim 14, further comprising utilizing the repository to generate a new machine learning model based on a combination of portions of a plurality of machine learning models stored in the repository.

14. A system, comprising:
a processor configured to perform the method of any of claims 1 to 13 or to:
determine that a selected server among a pool of servers is eligible to be utilized for machine learning training;
use at least the selected server to train at least a portion of a machine learning model;
determine that the selected server among the pool of servers is no longer eligible to be utilized for machine learning training;
save a training state of the machine learning model; and
return the selected server for other use in the pool of servers; and
a memory coupled with the processor, wherein the memory is configured to provide the processor with instructions.

15. A computer program product, the computer program product being embodied in a non-transitory computer readable storage medium and comprising computer instructions for performing the method of any of claims 1 to 13 or for:
determining that a selected server among a pool of servers is eligible to be utilized for machine learning training;
using at least the selected server to train at least a portion of a machine learning model;
determining that the selected server among the pool of servers is no longer eligible to be utilized for machine learning training;
saving a training state of the machine learning model; and
returning the selected server for other use in the pool of servers.
